# Europäisches Patentamt
## European Patent Office
## Office européen des brevets

(11) Publication number: **0 138 528 B1**

(12) **EUROPEAN PATENT SPECIFICATION**

(45) Date of publication of patent specification: **29.08.90**

(51) Int. Cl.⁵: **C 08 K 3/40**

(21) Application number: **84306808.1**

(22) Date of filing: **05.10.84**

(54) **Composite glass-plastic articles.**

(30) Priority: **20.10.83 US 543970**

(43) Date of publication of application:
**24.04.85 Bulletin 85/17**

(45) Publication of the grant of the patent:
**29.08.90 Bulletin 90/35**

(84) Designated Contracting States:
**DE FR GB IT**

(56) References cited:
**EP-A-0 082 115**
**DE-A-3 308 186**
**DE-B-1 284 588**

(73) Proprietor: **Corning Glass Works
Houghton Park
Corning New York 14831 (US)**

(72) Inventor: **Barnhart, Kenneth Trevette
215 E. Second Street
Corning New York (US)**
Inventor: **Quinn, Candace Jo
Thurber Road
Corning New York (US)**

(74) Representative: **Smith, Sydney et al
Elkington and Fife Beacon House 113 Kingsway
London WC2B 6PP (GB)**

Courier Press, Leamington Spa, England.

## Description

The present invention relates to essentially transparent glass/plastic composite bodies, comprising particles of glass dispersed in a plastic matrix.

A particular embodiment of the invention comprises composites of photochromic particles dispersed within a plastic matrix, which may be shaped as lenses for ophthalmic applications.

Photochromic glasses have been known since U.S. Patent 3,208,860, which have also been applied in the ophthalmic field, in which plashic lenses have also been proposed to be used because of their light weight. Since organic photochromic materials lose their photochromic behaviour after a few cycles of darkening and lightening, whereas photochromic glasses do not show such a fatigue behavior, various schemes have been proposed to combine inorganic photochromic materials with plastics in some manner. Thus. U.S. Patents 3,932,690, 4,168,339, 4,300,821, 3,508,810 suggest laminated articles, enveloped or bonded photochromic microsheets, U.S. Patents 3,875,321, 3,950,591, 4,035,527 suggest coated bodies, and U.S. Patents 4,012,232, 4,046,586, 4,049,567 and 4,049,846 discuss several methods of incorporating photochromic particles into plastic matrices.

Although all of these articles are intended to be transparent, apart from the fatigue problems of plastic photochromics the development of a strong, permanent bond between a glass sheet and a plastic substrate which will resist temperature and humidity changes in the service environment has proven difficult, and the elimination of haze due to light scattering from photochromic particles incorporated in the plastic mass has been perplexing. An extreme illustration of the latter problem is provided in United States Patent No. 4,134,853, where the final product is opaque even though the photochromic particles are reduced to submicron dimensions.

In DE—A—3,308,186 there is described a process for the preparation of a photochromic material in which a liquid mixture is made of a hardenable film forming resin, a hardener for the resin and particles of photochromic glass having a particle size of 0.05 to 1.00 µm, this mixture is poured onto a surface or into a mold and heated to harden the resin and to remove water or solvent, the mixture containing such an amount of photochromic glass particles that the content of glass particles in the dried cast layer amounts to 10—40% by weight.

According to Example 1 the glass powder is made in a first step; the powder is washed with methanol and dried before use.

It is stated that the photochromic material which is made according to the invention may be applied to a variety of surfaces, such as glass, paper, wood, synthetic resins and metal. There is no reference to the use of the material in ophthalmology. No reference is made to the transparency of the material.

Nevertheless, in view of the extensive research disclosed in the above patent literature and the problems that have been witnessed with the articles resulting therefrom, it was determined that the ideal product would comprise a composite body consisting of photochromic glass particles dispersed within a plastic mass. Thus, a number of advantages in fabricating procedures and in the physical properties exhibited by the final body can be enjoyed in a composite product consisting of photochromic glass particles incorporated in a plastic mass, when compared with a glass-plastic laminate. For example, fabrication of a composite ophthalmic lens would make use of bulk glass (which is milled into a powder), rather than requiring the production of optical quality microsheet. That circumstance means that glass manufacture and subsequent heat treatment to develop photochromic properties therein are easier, and fewer forming constraints are imposed on the glass composition. That latter feature is of particular advantage in that essentially any inorganic photochromic glass composition would be operable. For example, microsheet exhibiting uniform photochromic properties is difficult to form from certain cadmium halide-containing glass compositions, such as are disclosed in United States Patent Nos. 3,325,299 and 4,166,745, because the photochromic properties thereof are quite sensitive to cooling rates during forming. Uniformity, however, is improved in glass articles of substantial cross section and furhher homogenization can be achieved when the glass body is triturated. Furthermore, fabrication of a composite body is simpler than forming a laminated article. The principal advantage of such a composite body, when compared with a laminated structure, is the absence of delamination problem. Finally, the presence of the glass particles improves the resistance of the plastic mass to abrasion.

The primary objective of the instant invention is to produce essentially transparent composite articles consisting of glass particles disposed in an organic plastic mass.

A specific objective is to produce such articles wherein said particles consist of photochromic glass.

An even more specific objective is to produce such articles in the configuration of photochromic ophthalmic and plano lenses.

The likelihood of success in developing the desired composite articles was not deemed high for three reasons: (1) initial experiments produced composites exhibiting significantly reduced visible transmittance due to the presence of haze which varied with temperature; (2) it was theorized that substantial haze would invariably be present since visible light would be scattered at the glass particle/plastic matrix interface resulting from different indices of refraction of the glass and plastic; and (3) it was conjectured that matching of the refractive indices of the glass and plastic could not be achieved over any significant range of temperatures due to the large thermal expansion of the plastic.

We have discovered that the degree of haze in such composite articles is a function of the mode of preparation thereof and is largely related to poor bonding at the glass/plastic interface. Hence, the most critical parameters in processing are: (a) the presence of water on the surface of the glass particles (which inhibits bonding between the particles and the plastic); (b) the size of the glass particles (primarily through the relationship of surface area to particle size); and (c) trapped air at the particle/plastic interface.

The absence of water from the surface of the glass particles can be achieved by drying the particles at elevated temperatures to drive off surface-adsorbed water.

Particle sizes within the range of about 0.5—100 µm have been found to be operable, the most preferred varying between about 10—50 µm. Particles of smaller dimensions have higher surface areas and, consequently, are more difficult to dry and maintain free from adsorbed gases and contaminants picked up during milling or other particle-reducing operations. Larger particles evidence a significant tendency to settle out when blended into the plastic matrix such that maintenance of a uniform dispersion becomes a serious problem.

The desired essentially transparent photochromic composite articles can be prepared via the following general steps:

(1) a body of potentially photochromic glass having a refractive index appropriate to the intended plastic matrix, normally within the range of about ±0.002, is formed. (The expression potentially photochromic indicates that the glass as formed exhibits little, if any, photochromic behavior, photochromism being developed through heat treatment of the glass. It is possible to cool the freshly-shaped glass body in such a manner that photochromism is generated therein, but, because of the difficulty in closely controlling the development of photochromism thereby, the much preferred practice has involved subjecting a body of potentially photochromic glass to a subsequent, carefully-defined heat treatment).

(2) The glass body is heat treated to develop photochromic behavior therein.

(3) The photochromic glass body is milled or otherwise communited to a powder in the ambient environment.

(4) The desired particle size fraction of the powdered glass is separated, e.g., by screening.

(5) Adsorbed water is removed from the separated fraction of glass particles; by high temperature drying.

(6) The water-free particles are mixed with the plastic matrix material present in the liquid state to form a suspension.

(7) The suspension is subjected to a vacuum to remove entrapped air.

(8) The suspension is formed into a shape of a desired geometry, e.g., the suspension is cast into a lens mold.

(9) The plastic matrix material is cured to a solid body.

Several modifications of that general series of operations are possible. For example:

(a) Instead of heat treating the potentially photochromic glass body in bulk form, i.e., prior to trituration to a powder, the powder can be dried and heat treated simultaneously after the particle reduction process.

(b) Instead of communiting the glass in the ambient environment, that operation may be undertaken in the presence of the plastic matrix material in the liquid state and the desired particle size fraction separated through wet screening or settling techniques (a function of the viscosity of the liquid and the density of the glass). Step (5) can be eliminated when this modification of the basic general procedure is employed.

(c) The glass particles can be acid washed to remove surface contamination, enhance bonding, and, perhaps, impart a gradient index effect.

(d) The bond between the glass particles and the plastic matrix may be improved through the use of surfactants or through coating the glass particles with a silane compound.

As can be appreciated, in such applications as lenses for eyeware the desire has been for light weight products. Accordingly, such lenses will contain only that amount of photochromic glass particles which is sufficient to impart the desired overall photochromic behavior thereto.

Therefore, whereas essentially transparent composite articles have been prepared with glass particles comprising up to 50% by weight of the composite, such loadings far exceed the amount required for desired photochromic properties. Hence, a loading of 20% by weight is equivalent to microsheet of about 0.010" (0.0254 cm) cross section and a 30% by weight content is equivalent to microsheet of about 0.015" (0.0381 cm) thickness. Consequently, loadings of about 20% by weight glass particles have been deemed optimal for a wide range of glass compositions, although certain copper-cadmium halide-containing glasses which exhibit high surface darkening can be successfully employed in amounts as low as 5—10%. A loading of glass particles within the range of 5—30% by weight of the composite body is preferred.

The tendency of the glass particles to settle out from the suspension in the uncured plastic matrix may be utilized to advantage, where desired. For example, as has been observed above, the proper particle size fraction can be separated from the powdered glass by allowing the suspension to stand for a predetermined length of time. Settling can also be used to devise a gradient photochromic lens rather than one of uniform properties throughout. Hence, semifinished lenses with improved polishing characteristics can be produced by choosing a plastic viscosity and glass particle size such that, when the glass-plastic suspension is cast into the mold, the particles are permitted to settle out, i.e., the particles will settle toward the front, finished surface of the lens. After curing the plastic, the back surface of the lens can then be ground and polished to prescription without experiencing any "pulling out" of glass particles from the plastic matrix.

This "pulling out" of glass particles can have a devastating effect upon the transparency exhibited by the lens. Scanning electron microscopy studies of lenses demonstrating different levels of haze have indicated that the clearer products contain larger, better-bonded particles. The very small glass particles in the hazy bodies were observed to pull out of the plastic matrix. In the extreme case, a void between the glass particle and the plastic results in a dramatic index step with consequent very high light scattering. Those studies serve to emphasize that the dvelopment of haze is, in part, a function of the bonding existing between the glass particles and the plastic matrix. The above studies could also lead to the hypothesis that the effect of particle size might merely be that the area of glass/plastic interface, i.e., the area where light scattering occurs, is a function of the particle size at constant weight loading of glass.

It has also been observed that the size of the glass particles exerts a profound effect upon the development of haze as a function of temperature. Thus, products containing very small glass particles are much more susceptible to haze buildup upon changes of temperature. Again, however, it can be conjectured that the weak bonding between the glass particles and the plastic matrix, in contrast to the change in index of the plastic with temperature, is the critical parameter. Accordingly, where the bonding is poor, the plastic, having a much higher thermal expansion than the glass, is prone to pull away from the glass particle upon heating. That phenomenon causes haze to develop as voids open at the glass/plastic interface.

A potentially photochromic glass having the composition reported below, expressed in terms of parts by weight on the oxide basis, was melted in a small laboratory continuously-melting unit and lens blanks pressed from the melt. Because it is not known with which cations the halides are combined, and because the levels thereof are so low, they are merely recited in terms of halides, in accordance with conventional glass analysis practice. Furthermore, inasmuch as the sum of the values of the individual components closely approximates 100, for all practical purposes the amount of each recorded may be deemed to reflect weight percent. The actual batch ingredients may comprise any materials, either oxides or other compounds, which, when melted together, will be converted into the desired oxides in the proper proportions.

| | |
|---|---|
| $SiO_2$ | 56.2 |
| $Al_2O_3$ | 10.5 |
| $B_2O_3$ | 20.5 |
| $Na_2O$ | 9.0 |
| BaO | 2.5 |
| $TiO_2$ | 0.5 |
| F | 0.8 |
| CdO | 1.5 |
| Cl | 0.8 |
| CuO | 0.25 |
| SnO | 0.25 |
| Ag | 0.035 |

The glass slab was dry ballmilled, utilizing $Al_2O_3$ balls, and particle fractions separated through screening as reported in the table below, viz. particles passing a No. 400 United States Standard Sieve (37 μm) and particles passing a No. 140 United States Standard Sieve (105 μm), but resting on a No. 400 screen. The particles passing the No. 400 screen were considered to have an average particle size of about 10 μm.

Lenses of 2 mm thickness were prepared by thoroughly blending those fractions into liquid, partially-polymerized CR-39® resin, casting the resulting mixture into a mold and curing the resin. CR-39® is a thermosetting plastic with a refractive index of about 1.504 made from diethylene glycol (allyl carbonate) resin which has been employed extensively in ophthalmic applications (see US—A—4,311,762 col 1, lines 9—24). The refractive index of the glass was also about 1.504. In each instance the loading of glass particles was 20% by weight.

As recorded in the table below, the first set of lenses was formed from as-received −400 mesh glass powder. The resultant lenses transmitted an average of only about 2—4% of the incident light at room temperature ($T_o$). The second set of lenses was prepared from −400 mesh glass powder which had been dried at 450°C for 20 minutes and then cooled in a desiccator before blending into the partially-polymerized CR-39 resin. Those lenses transmitted an average of about 64% of the incident light at room temperature. The third set of lenses was produced from the glass particle fraction −140+400 mesh which had also been dried at 450°C for 20 minutes and cooled in a desiccator before mixing in the resin. Those lenses transmitted an average of about 87% of the incident light.

The second and third sets of lenses were heated to 95°C and then cooled to room temperature ($\Delta T$, RT 95°C). The average transmittance of incident light of the second set of lenses was only about 28%, a loss of 36%, whereas the average transmittance of the incident light of the third set was about 81%, a loss of only 6%.

TABLE

| Sample | Particle size | Dried | $T_o$ | $\Delta T$, RT 95°C |
|--------|---------------|-------|-------|---------------------|
| A | −400 mesh | No. | 2—4% | — |
| B | −400 mesh | Yes | 64% | 36% |
| C | −140 +400 mesh | Yes | 87% | 6% |

An examination of the above data indicates that transparency can be achieved through a combination of particle size and removal of absorbed surface water from the particles.

As a matter of convenience, Samples A, B, and C were prepared from a potentially photochromic glass composition of the type described in U.S. Patent No. 4,076,544. Thus, levels of haze can be more accurately determined on glasses in the undarkened state. The glasses of Patent No. 4,076,544 are especially suitable for use in the inventive composites inasmuch as they are surface darkening, i.e., they darken quite deeply in a layer of only a few microns within the glass surface. That quality permits good photochromic properties to be imparted to the composite bodies with low glass particle loadings. Most usually, a potentially photochromic glass will be heat treated to develop photochromism prior to being combined with the organic material, because the heat treatment temperatures required frequently exceed those levels at which the organic material maintains stability.

The base composition of the glass is not critical to the operability of the invention (so long as no reaction takes place between the glass and the organic material). Hence, the glass may be photochromic or non-photochromic; it is only necessary that the particles thereof have water-free surfaces, have dimensions ranging between about 0.5—100 microns, and have a refractive index appropriate to or compatible with the plastic. This broad scope of functioning compositions permits the use of essentially limitless varieties of photochromic glasses; for example; glasses described in U.S. Patent No. 3,208,860, U.S. Patent No. 3,293,052, U.S. Patent No. 3,325,299, U.S. Patent No. 3,615,771, U.S. Patent No. 3,328,182, U.S. Patent No. 3,630,765, U.S. Patent No. 3,703,388, U.S. Patent No. 3,876,436, U.S. Patent No. 3,902,909, and U.S. Patent No. 4,166,745 can be considered for this application.

Likewise, whereas CR-39 resin has been utilized most extensively in eyeware applications, other organic plastics capable of being prepared in optical quality are also operable. Such materials include the well-known polymethylmethacrylates and polycarbonates marketed under such names as "Plexiglas", "Lexan", and "Lucite".

With certain silver-containing glass compositions, an undesirable discoloration or graying has been observed when the glass particles are mixed with organic liquids such as CR-39 monomer. It has been postulated that this coloration is the result of an irreversible reduction of silver ions to colloidal silver metal at the surface of the glass particles. Consequently, care will be exercised to utilize the proper environment to maintain the silver in the ionic state. It has also been found that changes in the glass chemistry and in the thermal history to which the glass is exposed can be employed to eliminate that reaction.

**Claims**

1. An essentially transparent glass/plastic composite body consisting of glass particles dispersed within a matrix; characterised in that the particles of glass have dimensions within the range of 0.5 to 100 µm, the glass particles have a water free surface, said glass particles comprising up to 50% by weight of said composite body and have a refractive index within ±0.002 of the plastic matrix; which composite body is free from trapped air and voids.

2. A composite body as claimed in Claim 1 characterized in that the glass particles have dimensions of from 10—50 µm.

3. A composite body as claimed in Claim 1 or Claim 2 characterized in that the glass particles comprise from 5—30% by weight of said composite body.

4. A composite body as claimed in any of Claims 1 to 3 characterized in that the glass exhibits photochromic properties.

5. A method for preparing an essentially transparent glass/plastic composite body as claimed in Claim 1 comprising the steps of:

(a) preparing a body of glass having a refractive index within ±0.002 of the plastic;

(b) comminuting said glass body to a powder;

(c) separating a section of glass powder; said fraction consisting of glass particles having dimensions of from 0.5—100 µm from said powder;

(d) removing absorbed water from the surfaces of said glass particles by heating to an elevated temperature;

(e) mixing said glass particles with said plastic in liquid uncured state; said particles comprising up to 50% by weight of the total mixture;

(f) subjecting said mixture to a vacuum to remove entrapped air;

(g) forming said mixture into a shape of a desired geometry; and then

(h) curing said plastic to a solid body.

6. A method as claimed in Claim 5, characterized in that said glass exhibits photochromic properties.

7. A method as claimed in Claim 5 or Claim 6 characterized in that said glass particles have dimensions of from 10—50 μm.

8. A method as claimed in any of Claims 5 to 7 characterized in that said glass particles comprise from 5—30% of said composite body.

**Patentansprüche**

1. Ein im wesentlichen transparenter Glas-/Kunststoff-Verbundkörper, bestehend aus in einer Matrix dispergierten Glaspartikeln dadurch gekennzeichnet, daß die Glaspartikeln eine Größenordnung im Bereich von 0,5—100 μm und eine wasserfreie Oberfläche aufweisen, wobei diese Glaspartikeln bis zu 50 Gew.-% des Verbundkörpers ausmachen, einen Brechungsindex innerhalb von ±0,002 der Kunststoffmatrix aufweisen und der Verbundkörper frei von eingeschlossener Luft und von Blasen ist.

2. Verbundkörper nach Anspruch 1, dadurch gekennzeichnet, daß die Glaspartikeln eine Größenordnung von 10—50 μm aufweisen.

3. Verbundkörper nach Anspruch 1 oder 2, dadurch gekennzeichnet, daß die Glaspartikeln 5—30 Gew.-% des Verbundkörpers ausmachen.

4. Verbundkörper nach einem der Ansprüche 1—3, dadurch gekennzeichnet, daß das Glas photochrome Eigenschaften aufweist.

5. Verfahren zur Herstellung eines im wesentlichen transparenten Glas-/Kunststoff-Verbundkörpers nach Anspruch 1, bestehend aus den Schritten;

(a) Herstellen eines Glaskörpers mit einem Brechungsindex innerhalb von ±0,002 des Kunststoffs;

(b) Zerkleinern des Glaskörpers zu einem Pulver;

(c) Abtrennen eines Teiles des Glaspulvers, wobei dieser Anteil aus Glaspartikeln mit einer Größenordnung im Bereich von 0,5—100 μm aus dem Pulver beteht;

(d) Entfernen des absorbierten Wassers von den Oberflächen der Glaspartikeln durch Erhitzen auf eine erhöhte Temperatur;

(e) Mischen der Glaspartikeln mit dem Kunststoff im flüssigen, nicht-ausgehärteten Zustand, wobie die Partikeln bis zu 50 Gew.-% der Gesamtmischung ausmachen;

(f) Vakuumisierung der Mischung, um Lufteinschlüsse zu entfernen;

(g) Gestalten der Mischung zu einer Form einer gewünschten Gestalt und anschließend

(h) Aushärten des Kunststoffs zu einem Festkörper.

6. Verfahren nach Anspruch 5, dadurch gekennzeichnet, daß das Glas photochrome Eigenschaften aufweist.

7. Verfahren nach Anspruch 5 oder 6, dadurch gekennzeichnet, daß die Glaspartikeln eine Größenordnung von 10—50 μm aufweisen.

8. Verfahren nach einem der Ansprüche 5—7, dadurch gekennzeichnet, daß die Glaspartikeln 5—30% des Verbundkörpers ausmachen.

**Revendications**

1. Un corps composite de verre/matière plastique essentiellement transparent constitué de particules de verre dispersées au sein d'une matrice; caractérisé en ce que les particules de verre ont des dimensions comprises entre 0,5 et 100 μm les (particules de verre ont une surface exempte d'eau, lesdites particules de verre constituent jusqu'à 50% en poidsd dudit corps composite et leur indice de réfraction est égal à celui de la matrice plastique ±0,002; ce corps composite étant exempt d'air et de vides occlus.

2. Un corps composite tel que revendiqué dans la revendication 1, caractérisé en ce que les particules de verre ont des dimensions de 10 à 50 μm.

3. Un corps composite tel que revendiquée dans la revendication 1 ou la revendication 2, caractérisé en ce que les particules de verre constituent 5 à 30% en poids dudit corps composite.

4. Un corps composite tel que revendiqué dans l'une quelconque des revendications 1 à 3, caractérisé en ce que le verre présente des propriétés photochromiques.

5. Un procédé pour fabriquer un corps composite de verre/matière plastique essentiellement transparent tel que revendiqué dans la revendication 1, comprenant les étapes suivantes:

(a) préparer un corps de verre ayant un indice de réfraction égal à celui de la matière plastique ±0,002;

(b) broyer ledit corps de verre en une poudre;

(c) séparer une fraction de poudre de verre; ladite fraction étant celle des particules de verre ayant des dimensions de 0,5 à 100 μm provenant de ladite poudre;

(d) éliminer l'eau absorbée des surfaces desdites particules de verre par chauffage à une température élevée;

(e) mélanger lesdites particules de verre avec ladite matière plastique à l'état liquide non durci; lesdites particules consistuant jusqu'à 50% en poids du mélange total;

## EP 0 138 528 B1

(f) soumettre ledit mélange à un vide pour éliminer l'air emprisonné;

(g) façonner ledit mélange pour lui donner une forme de la géométrie désirée; puis

(h) durcir ladite matière plastique en un corps solide.

6. Un procédé tel que revendiqué dans la revendication 5, caractérisée en ce que ledit verre présente des propriétés photochromiques.

7. Un procédé tel que revendiqué dans la revendication 5, ou la revendication 6, caractérisé en ce que lesdites particules de verre ont des dimensions de 10 à 50 μm.

8. Un procédé tel que revendiqué dans l'une quelconque des revendications 5 à 7, caractérisé en ce que lesdites particules de verre constituent 5 à 30% dudit corps composite.